# EUROPEAN PATENT APPLICATION

(11) **EP 4 443 707 A1**
(43) Date of publication of application: **09.10.2024**
(21) Application number: 23780455.4
(22) Date of filing: 28.03.2023
(51) Int. Cl.: H02K 1/276

(54) **ROTATING ELECTRIC MACHINE ROTOR**

(30) Priority: 30.03.2022 JP 2022055379
(71) Applicant: AISIN CORPORATION, Kariya-shi, Aichi 448-8650 (JP)
(72) Inventor: IIJIMA Ami, Kariya-shi, Aichi 448-8650 (JP); IDEUE Shigeki, Kariya-shi, Aichi 448-8650 (JP); KIDO Yushi, Kariya-shi, Aichi 448-8650 (JP); TSUDA Teppei, Kariya-shi, Aichi 448-8650 (JP)
(74) Representative: Kramer Barske Schmidtchen Patentanwälte PartG mbB
(86) International application number: PCT/JP2023/012384
(87) International publication number: WO 2023/190446

(57) **Abstract**

A rotor for a rotating electrical machine is disclosed that includes: a rotor core having a radially outer first magnet hole and a radially inner second magnet hole; a first permanent magnet in the first magnet hole; and a second permanent magnet in the second magnet hole. The rotor core includes a first portion located radially outward of the first magnet hole, a second portion located between the first magnet hole and the second magnet hole, a third portion located radially inward of the second magnet hole, and bridge portions connecting the third portion and the second portion. A separation distance of the second permanent magnet from the first permanent magnet is smaller at a position closer to the bridge portion in a circumferential direction than at a position farther from the bridge portion in the circumferential direction along a side of the second permanent magnet that faces the first permanent magnet, as viewed in an axial direction. At least one of the plurality of bridge portions extends radially inward beyond a radially inner edge of a circumferential end of the second permanent magnet facing the at least one bridge portion in the circumferential direction.

## Description

### TECHNICAL FIELD

The present disclosure relates to rotors for rotating electrical machines.

### BACKGROUND ART

A technique is known in which a plurality of permanent magnets is arranged in a two-layer structure in a rotor core.

### Related Art Documents

### Patent Documents

Patent Document 1: Japanese Unexamined Patent Application Publication No. 2019-54659 (JP 2019-54659 A)

### SUMMARY OF THE INVENTION

### Problem to be Solved by the Invention

However, in the case of such a two-layer structure (same applies to three or more layers), making a bridge relatively thick in order to withstand an increase in centrifugal force associated with an increase in rotational speed of a rotating electrical machine increases leakage magnetic flux through the bridge. Moreover, enlarging the end shape of magnet holes by relatively large rounded corners R etc. in order to reduce stress concentration on the bridge tends to contribute to a decrease in reluctance torque.

In one aspect, it is an object of the present disclosure to allow an increase in rotational speed of a rotating electrical machine while reducing both a decrease in reluctance torque and stress concentration on a bridge.

### Means for Solving the Problem

In one aspect, a rotor for a rotating electrical machine is provided that includes: a rotor core having a radially outer first magnet hole and a radially inner second magnet hole;
a first permanent magnet in the first magnet hole; and
a second permanent magnet in the second magnet hole.

The rotor core includes a first portion located radially outward of the first magnet hole, a second portion extending between the first magnet hole and the second magnet hole in such a manner that both sides in a circumferential direction of the second portion extend to an outer peripheral surface of the rotor core, a third portion extending radially inward of the second magnet hole in such a manner that both sides in the circumferential direction of the third portion extend to the outer peripheral surface of the rotor core, and a plurality of bridge portions located radially inward of the outer peripheral surface of the rotor core and connecting the third portion and the second portion.

The second permanent magnet includes a d-axis-side second permanent magnet located on a d-axis or near the d-axis.

A separation distance of the d-axis-side second permanent magnet from the first permanent magnet is smaller at a position closer to at least one of the plurality of bridge portions in the circumferential direction than at a position farther from the at least one bridge portion in the circumferential direction along a side of the d-axis-side second permanent magnet that faces the first permanent magnet, as viewed in an axial direction.

The at least one bridge portion extends radially inward beyond a radially inner edge of a circumferential end of the d-axis-side second permanent magnet facing the at least one bridge portion in the circumferential direction.

### Effects of the Invention

In the one aspect, according to the present disclosure, it is possible to increase the rotational speed of a rotating electrical machine while reducing both a decrease in reluctance torque and stress concentration on a bridge.

### BRIEF DESCRIPTION OF THE DRAWINGS

[FIG. 1] FIG. 1 is a sectional view schematically showing a sectional structure of a motor according to an embodiment.
[FIG. 2] FIG. 2 is a sectional view of a rotor (sectional view taken along a plane perpendicular to an axial direction).
[FIG. 3] FIG. 3 is an enlarged view of a portion related to one magnetic pole shown in FIG. 2.
[FIG. 4] FIG. 4 is a further enlarged view of the portion of FIG. 3, showing lines for describing shape features.
[FIG. 5] FIG. 5 is a diagram illustrating part of effects of the embodiment in comparison with a comparative example.
[FIG. 6] FIG. 6 is an enlarged view of a portion related to one magnetic pole according to another embodiment.
[FIG. 7] FIG. 7 is an enlarged view of a portion related to one magnetic pole according to still another embodiment.
[FIG. 8] FIG. 8 is an enlarged view of a portion related to one magnetic pole according to yet another embodiment.

### MODES FOR CARRYING OUT THE INVENTION

Embodiments will be described in detail below with reference to the accompanying drawings. The dimensional ratios in the drawings are merely illustrative, and are not limited to these. The shapes etc. in the drawings may be partially exaggerated for convenience of description.

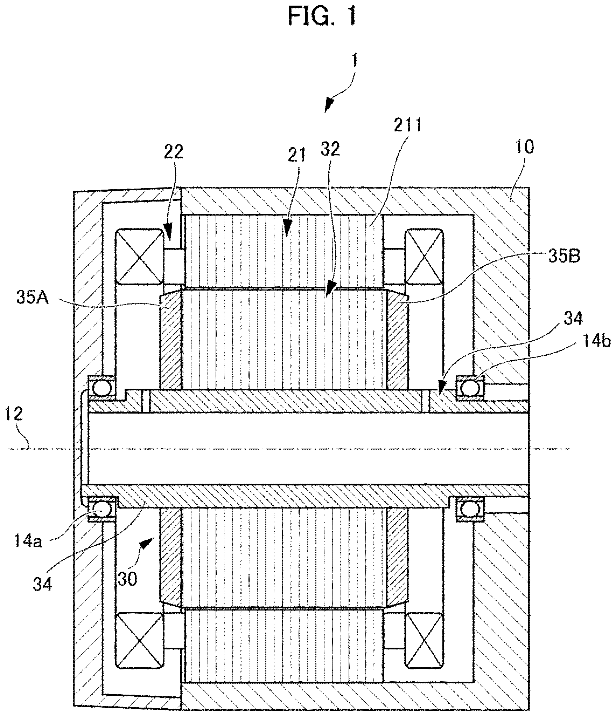

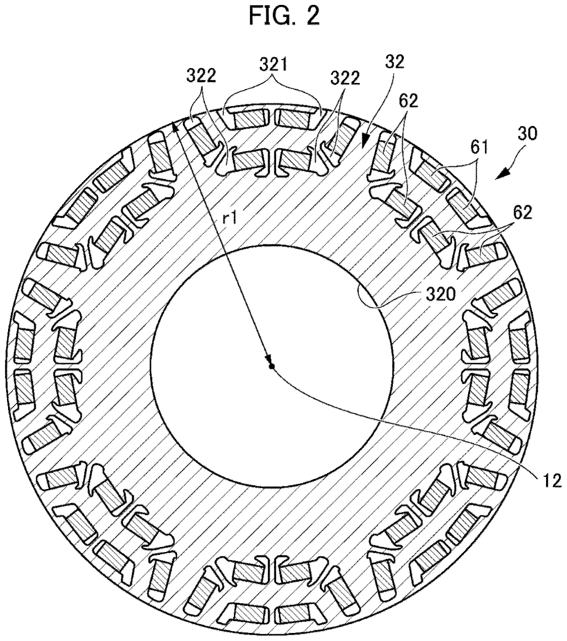

FIG. 1 is a sectional view schematically showing a sectional structure of a motor 1 according to an embodiment. FIG. 2 is a sectional view of a rotor 30 (sectional view taken along a plane perpendicular to an axial direction). For simplicity, in FIG. 2 etc., reference signs may be given only to part of a plurality of portions having the same attribute.

FIG. 1 shows a rotation axis 12 of the motor 1. In the following description, the axial direction refers to a direction in which the rotation axis (rotation center) 12 of the motor 1 extends, and the radial direction refers to a radial direction about the rotation axis 12. Therefore, "radially outer" and "radially outward" refer to a side away from the rotation axis 12, and the "radially inner" and "radially inward" refers to a side toward the rotation axis 12. The circumferential direction corresponds to a rotation direction about the rotation axis 12.

The motor 1 may be a vehicle drive motor that is used in, for example, a hybrid electric vehicle or a battery electric vehicle. However, the motor 1 may be used for any other purposes.

The motor 1 is of an inner rotor type, and a stator 21 is provided so as to surround the radially outer side of the rotor 30. The radially outer side of the stator 21 is fixed to a motor housing 10. The stator 21 includes a stator core 211 composed of, for example, annular magnetic steel laminations, and a plurality of slots (not shown) around which a coil 22 is wound is provided on the radially inner side of the stator core 211.

The rotor 30 is disposed radially inward of the stator 21.

The rotor 30 includes a rotor core 32, a rotor shaft 34, end plates 35A, 35B, and permanent magnets 61, 62.

The rotor core 32 is fixed to the radially outer surface of the rotor shaft 34 and rotates with the rotor shaft 34. The rotor core 32 has a shaft hole 320 (see FIG. 2), and the rotor shaft 34 is fitted in the shaft hole 320. The rotor core 32 may be fixed to the rotor shaft 34 by shrink fitting, press fitting, or the like. For example, the rotor core 32 may be coupled to the rotor shaft 34 by key coupling or spline coupling. The rotor shaft 34 is rotatably supported by the motor housing 10 via bearings 14a, 14b. The rotor shaft 34 defines the rotation axis 12 of the motor 1.

The rotor core 32 is composed of, for example, annular magnetic steel laminations. The permanent magnets 61, 62 (see FIG. 2) are embedded in the rotor core 32. That is, the rotor core 32 has magnet holes 321, 322 (see FIG. 2) extending through the rotor core 32 in the axial direction, and the permanent magnets 61, 62 are inserted and fixed in the magnet holes 321, 322. In a modification, the rotor core 32 may be made of a green compact obtained by pressing and compacting magnetic powder.

The rotor core 32 is designed in a circular shape having a first radius r1, and the outer peripheral surface of the rotor core 32 includes portions having the first radius r1 (outer peripheral surface portions 328B, parts 328C, etc., which will be described later). In the present embodiment, an outer peripheral surface 328 of the rotor core 32 has the first radius r1. In a modification, the circular shape of the rotor core 32 does not have to be a perfect circle, and may be, for example, a circular shape having a cut in its part.

As shown in FIG. 2, the rotor core 32 has a rotationally symmetric form about the rotation axis 12 as viewed in the axial direction. In the example shown in FIG. 2, the rotor core 32 has a form in which the permanent magnets 61, 62 of individual sets overlap every time the rotor core 32 rotates by 45 degrees about the rotation axis 12.

The plurality of permanent magnets 61, 62 may be made of neodymium etc. In the present embodiment, as an example, as shown in FIG. 2, the plurality of permanent magnets 61, 62 is arranged in pairs of the permanent magnets 61 and pairs of the permanent magnets 62 as viewed in the axial direction. In this case, a common magnetic pole is formed between a pair of permanent magnets 61 and between a pair of permanent magnets 62. The plurality of permanent magnets 61, 62 is arranged in such a manner that S poles and N poles appear alternately in the circumferential direction. In the present embodiment, the number of magnetic poles is eight, but the number of magnetic poles may be set as desired. In the present embodiment, the permanent magnets 61, 62 are in the same linear form as viewed in the axial direction. However, the permanent magnets 61, 62 may be in different forms. Either or both of the permanent magnets 61, 62 may be in a circular arc-shaped form as viewed in the axial direction.

Although FIG. 1 shows the motor 1 having a specific structure, the structure of the motor 1 is not limited to such a specific structure. For example, in FIG. 1, the rotor shaft 34 is hollow. However, the rotor shaft 34 may be solid.

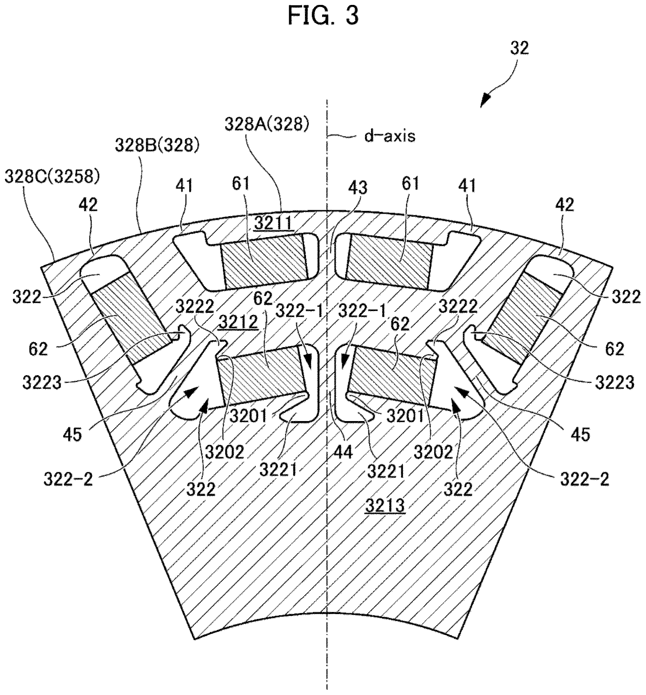

Next, the rotor core 32 and the permanent magnets 61, 62 will be described in more detail with reference to FIG. 3 and the subsequent figures. Although the configuration related to one magnetic pole will be described below, the same may apply to the configurations related to the other magnetic poles.

FIG. 3 is an enlarged view of a portion related to one magnetic pole shown in FIG. 2. The configuration related to one magnetic pole is basically symmetrical with respect to a d-axis (shown by "d-axis" in English in FIG. 3). Hereinafter, "circumferentially outer" and "circumferentially outward" refer to a side away from the d-axis, and the "circumferentially inner" and "circumferentially inward" refers to a side toward the d-axis.

The rotor core 32 has the radially outer magnet holes 321 (hereinafter referred to as "first magnet holes 321") and the radially inner magnet holes 322 (hereinafter referred to as "second magnet holes 322").

The first magnet holes 321 are provided in a pair such that the two first magnet holes 321 of the pair form a substantially V-shape (substantially V-shape that opens radially outward or radially inward). In a modification, the first magnet holes 321 may be provided in a pair such that the two first magnet holes 321 of the pair form a straight line shape, or the straight line shape may be implemented by a single straight hole (having a straight line shape perpendicular to the d-axis). A permanent magnet 61 is provided in each first magnet hole 321. A clearance may be provided between the first magnet hole 321 and the permanent magnet 61 at both longitudinal ends of the permanent magnet 61. The clearance may be an empty space or may be filled with resin etc.

The second magnet holes 322 are provided radially inward of the first magnet holes 321. Like the first magnet holes 321, the second magnet holes 322 are provided in a pair symmetrical with respect to the d axis. The second magnet holes 322 on both sides of the d axis in the circumferential direction extend in a wider range in the circumferential direction than the first magnet holes 321 on both sides of the d axis in the circumferential direction. A permanent magnet 62 is provided in each second magnet hole 322. A clearance may be provided between the second magnet hole 322 and the permanent magnet 62 at both longitudinal ends of the permanent magnet 62. The clearance may be an empty space or may be filled with resin etc.

In the present embodiment, two second magnet holes 322 are provided on one side in the circumferential direction of the d-axis, and two second magnet holes 322 are provided on the other side in the circumferential direction of the d-axis. That is, a total of four second magnet holes 322 are provided for one magnetic pole.

Since the rotor core 32 has such first magnet holes 321 and second magnet holes 322, the rotor core 32 has three portions 3211, 3212, and 3213 connected in the radial direction only via bridge portions (hereinafter also referred to as "first portion 3211," "second portion 3212," and "third portion 3213").

Specifically, the first portion 3211 extends radially outward of the first magnet holes 321. The first portion 3211 forms a part 328A (see FIG. 3) of the outer peripheral surface 328 of the rotor core 32.

The second portion 3212 extends between the second magnet holes 322 and the first magnet holes 321 such that both sides in the circumferential direction of the second portion 3212 extend to the outer peripheral surface 328 of the rotor core 32. The second portion 3212 forms parts 328B of the outer peripheral surface 328 of the rotor core 32 (hereinafter also referred to as "outer peripheral surface portions 328B of the second portion 3212") (see FIG. 3) on both sides in the circumferential direction of the first portion 3211. The second portion 3212 forms a magnetic path for q-axis magnetic flux. Specifically, the q-axis magnetic flux flows between the second magnet holes 322 and the first magnet holes 321 from one end (outer peripheral surface portion 328B on one side) toward the other end (outer peripheral surface portion 328B on the other side) of the second portion 3212.

The third portion 3213 extends radially inward of the second magnet holes 322 such that both sides in the circumferential direction of the third portion 3213 extend to the outer peripheral surface 328 of the rotor core 32. The third portion 3213 forms parts 328C (see FIG. 3) of the outer peripheral surface 328 of the rotor core 32 on both sides in the circumferential direction of the second portion 3212.

In the present embodiment, the mass of the third portion 3213 is significantly larger than the mass of the second portion 3212, and the mass of the second portion 3212 is significantly larger than the mass of the first portion 3211.

Since the rotor core 32 has such three portions 3211, 3212, and 3213, the rotor core 32 has a plurality of bridge portions 41, 42, 43, 44, and 45 connecting the three portions 3211, 3212, and 3213.

The bridge portions 41 (hereinafter referred to as "first bridge portions 41") support the first portion 3211 radially outward of the second portion 3212. That is, the first bridge portions 41 connect the second portion 3212 and the first portion 3211 and extend in the circumferential direction. The first bridge portions 41 are provided in a pair on both sides in the circumferential direction of (circumferentially outward of) the first portion 3211.

The bridge portions 42 (hereinafter referred to as "second bridge portions 42") support the second portion 3212 radially outward of the third portion 3213. That is, the second bridge portions 42 connect the third portion 3213 and the second portion 3212 and extend in the circumferential direction. The second bridge portions 42 are provided in a pair on both sides in the circumferential direction of (circumferentially outward of) the second portion 3212.

The bridge portion 43 (hereinafter referred to as "first center bridge portion 43") supports the first portion 3211 on the d-axis with respect to the second portion 3212.

The bridge portion 44 (hereinafter referred to as "second center bridge portion 44") supports the second portion 3212 on the d-axis with respect to the third portion 3213.

The bridge portions 45 (hereinafter referred to as the "second intermediate bridge portions 45") each support the second portion 3212 between two second magnet holes 322 with respect to the third portion 3213.

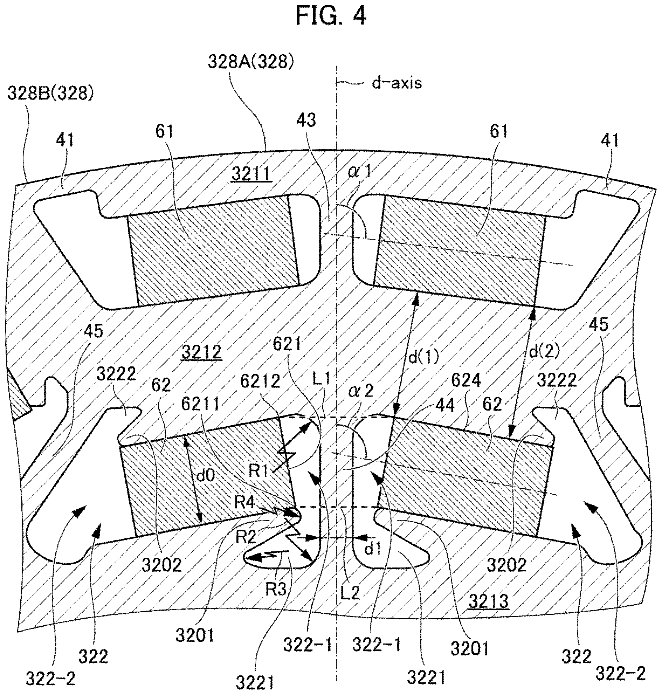

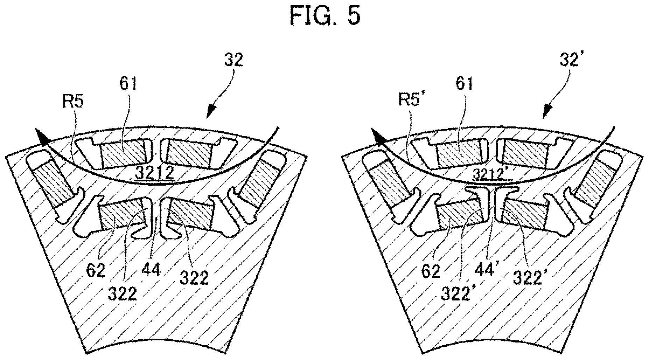

Next, characteristic configurations of the present embodiment will be described with reference to FIG. 4 and the subsequent figures. FIG. 4 is a further enlarged view of the portion of FIG. 3, showing lines for describing shape features. FIG. 5 is a diagram illustrating part of effects of the present embodiment in comparison with a comparative example. In FIG. 5, the comparative example is shown on the right side, the present embodiment is shown on the left side, and the flow of the q-axis magnetic flux in the comparative example and the present embodiment is schematically shown by arrows R5, R5', respectively. In the following description related to FIGS. 4 and 5, the second magnet holes 322 and the permanent magnets 62 refer to the circumferentially inner second magnet holes 322 and permanent magnets 62 out of the circumferentially outer and circumferentially inner second magnet holes 322 and permanent magnets 62, unless otherwise specified.

In the present embodiment, as shown in FIG. 4, the permanent magnets 62 each have a smaller separation distance d from the permanent magnet 61 at a circumferential position closer to the second center bridge portion 44 than at a circumferential position farther from the second center bridge portion 44 in the circumferential direction along a side 624 of the permanent magnet 62 that faces the permanent magnet 61, as viewed in the axial direction. That is, the permanent magnets 62 each have a smaller separation distance d from the permanent magnet 61 at a circumferentially inner position than at a circumferentially outer position. In FIG. 4, for convenience, the separation distances d of the permanent magnet 62 from the permanent magnet 61 at the circumferentially inner position on the permanent magnet 62 and at the circumferentially outer position on the permanent magnet 62 are denoted by d(1) and d(2), respectively, for a distinguishing purpose. The separation distance d may be a distance perpendicular to the side 624 of the permanent magnet 62 that faces the permanent magnet 61, as viewed in the axial direction. The separation distance d between the permanent magnet 62 and the permanent magnet 61 is a separation distance in a plane perpendicular to the axial direction (i.e., a separation distance in a plane including the plane of paper of FIG. 4), and corresponds to the width of the second portion 3212 (magnetic path width). Such a relationship in magnitude between the separation distances d tends to occur when α1 < α2, where α1 and α2 are the angles of the extending directions of the permanent magnets 61, 62 with respect to the d-axis, respectively. In particular, in the present embodiment, α1 < α2, and α2 is significantly larger than 90 degrees.

In this case, the permanent magnets 62 in the two adjacent second magnet holes 322 with the second center bridge portion 44 interposed therebetween in the circumferential direction may be each disposed in such an orientation that the side of the permanent magnet 62 that is closer to the d-axis in the circumferential direction is located radially outward of the side of the permanent magnet 62 that is farther from the d-axis in the circumferential direction. That is, the permanent magnets 62 in the two adjacent second magnet holes 322 with the second center bridge portion 44 interposed therebetween in the circumferential direction may be arranged in a V-shape pointing radially outward. In this case, compared to the case where the permanent magnets 61 are arranged in a V-shape pointing radially inward, the amount of the second portion 3212 can be relatively reduced without significantly reducing the width of the second portion 3212 (magnetic path width). As a result, it is possible to reduce stress (radially outward tensile stress) that is applied to the second center bridge portion 44 and the second intermediate bridge portions 45 due to the centrifugal force that is generated during rotation of the rotor 30.

In the present embodiment, the second center bridge portion 44 extends radially inward beyond radially inner edges 6211 of circumferential ends 621 of the permanent magnets 62 facing the second center bridge portion 44 in the circumferential direction. In other words, when a line segment L2 connecting the radially inner (and circumferentially inner) vertices of the two adjacent permanent magnets 62 with the d-axis interposed therebetween in the circumferential direction is used as a reference, the second center bridge portion 44 extends radially inward beyond the line segment L2. On the other hand, the second center bridge portion 44 does not extend radially outward beyond radially outer edges 6212 of the circumferential ends 621 of the permanent magnets 62 facing the second center bridge portion 44 in the circumferential direction. In other words, when a line segment L1 connecting the radially outer (and circumferentially inner) vertices of the two adjacent permanent magnets 62 with the d-axis interposed therebetween in the circumferential direction is used as a reference, the second center bridge portion 44 does not extend radially outward beyond the line segment L1.

As described above, in the present embodiment, the radial length of the second center bridge portion 44 is significantly larger than the radial width d0 of the permanent magnets 62, and extends radially inward beyond the circumferential ends 621 of the permanent magnets 62. In this case, rounded corners R1, R2 on both radial sides of the second center bridge portion 44 can be made relatively large. This can effectively reduce stress concentration (stress concentration due to the centrifugal force) on both radial ends of the second center bridge portion 44. In other words, it is possible to reduce the width d1 of the second center bridge portion 44 (and reduce leakage magnetic flux through the second center bridge portion 44) without increasing stress on both radial ends of the second center bridge portion 44.

In the present embodiment, the second center bridge portion 44 is extended radially inward beyond the line segment L2 in order to increase the radial length of the second center bridge portion 44. This can reduce a disadvantage that tends to occur in the comparative example (see rotor core 32' in FIG. 5) in which a second center bridge portion 44' is extended radially outward beyond the above line segment L1 (see FIG. 4) in order to increase the radial length of the second center bridge portion 44'. Specifically, in the comparative example in which the second center bridge portion 44' extends radially outward beyond the above line segment L1 (see FIG. 4) as shown in FIG. 5, the width of a second portion 3212' (magnetic path width) is reduced accordingly. This is because the radially outward extension of the second center bridge portion 44' is accompanied by radially outward extension of second magnet holes 322' located circumferentially outward of the second center bridge portion 44'. In this case, the reduction in width of the second portion 3212' (magnetic path width) causes a decrease in reluctance torque. On the other hand, according to the present embodiment, the radial length of the second center bridge portion 44 is increased without causing the second center bridge portion 44 to extend radially outward beyond the line segment L1, as described above. Therefore, the width of the second portion 3212 (magnetic path width) is not reduced due to the second center bridge portion 44.

According to the present embodiment, since the radial length of the second center bridge portion 44 is increased, it is possible to reduce stress concentration on the second center bridge portion 44 (and as a result, increase the rotational speed of the motor 1) and to effectively prevent a decrease in reluctance torque (decrease in width of the second portion 3212) due to the increase in radial length of the second center bridge portion 44.

In the present embodiment, the second magnet holes 322 each have a first overhang portion 3221 at its end closer to the second center bridge portion 44 in the circumferential direction (hereinafter also simply referred to as "circumferentially inner end 322-1"). The first overhang portion 3221 extends toward (overhangs) the permanent magnet 62 in the circumferential direction on the radially inner side of the circumferentially inner end 322-1. In this case, the first overhang portion 3221 may overlap the permanent magnet 62 with a part 3201 of the rotor core 32 therebetween as viewed in the radial direction. The first overhang portion 3221 is formed so as to be continuous from the rounded corner R2, forms a rounded corner R3, and then terminates with a rounded corner R4 near the vertex on the radially inner side and circumferentially inner side of the permanent magnet 62. Such a first overhang portion 3221 has a function to reduce an increase in back electromotive voltage.

In the present embodiment, the second magnet holes 322 each have a second overhang portion 3222 at its end farther from the second center bridge portion 44 in the circumferential direction (hereinafter also simply referred to as "circumferentially outer end 322-2"). The second overhang portion 3222 extends toward (overhangs) the permanent magnet 62 in the circumferential direction on the radially outer side of the circumferentially outer end 322-2. In this case, the second overhang portion 3222 may overlap the permanent magnet 62 with a part 3202 of the rotor core 32 therebetween as viewed in the radial direction. As described above, the second overhang portion 3222 may be provided in the common second magnet hole 322 in a diagonal positional relationship with the first overhang portion 3221. In this case, the function of the second overhang portion 3222 (function to reduce an increase in back electromotive force) is added, so that an increase in back electromotive force can be effectively reduced.

Since the second overhang portion 3222 enlarges the second magnet hole 322 toward the second portion 3212 (i.e., causes the second intermediate bridge portion 45 to extend radially outward beyond the permanent magnet 62), the width of the second portion 3212 (magnetic path width) may be reduced depending on the shape of the second overhang portion 3222 etc. Therefore, the second overhang portion 3222 is preferably formed so as not to significantly reduce the width of the second portion 3212 (magnetic path width). Particularly in the present embodiment, as described above, the separation distance d between the permanent magnet 62 and the permanent magnet 61 is greater at a circumferentially outer position on the permanent magnet 62 than at a circumferentially inner position on the permanent magnet 62. Therefore, forming the second overhang portion 3222 at a circumferentially outer position on the permanent magnet 62 rather than at a circumferentially inner position on the permanent magnet 62 makes it easier to allow the second portion 3212 to have a necessary width (magnetic path width).

In the present embodiment, the circumferentially outer second magnet holes 322 each also have an overhang portion 3223 in such a manner that the overhang portion 3223 faces the second overhang portion 3222 in the circumferential direction. In this case, the function of the overhang portion 3223 (function to reduce an increase in back electromotive force) is added, so that an increase in back electromotive force can be effectively reduced.

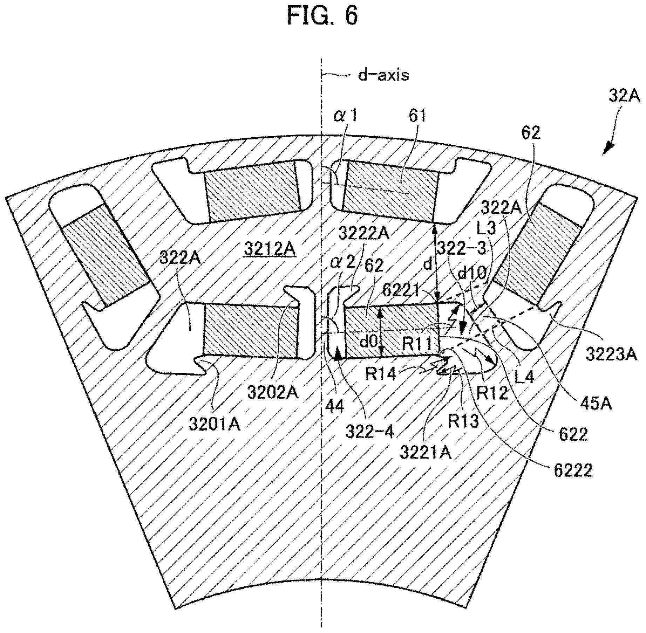

Next, some other embodiments will be described with reference to FIG. 6 and the subsequent figures.

FIG. 6 is an enlarged view of a portion related to one magnetic pole according to another embodiment. In the following description of FIG. 6 as well, second magnet holes 322A and permanent magnets 62 refer to the circumferentially inner second magnet holes 322A and permanent magnets 62, unless otherwise specified.

A rotor core 32A according to the present embodiment is different from the rotor core 32 according to the above embodiment mainly in that the second magnet holes 322 are replaced with the second magnet holes 322A. The second magnet holes 322A are different from the second magnet holes 322 mainly in orientation (angle α2), and therefore the orientations of the permanent magnets 62 in the second magnet holes 322A are different from the above embodiment.

Specifically, in the present embodiment, the permanent magnets 62 each have a smaller separation distance d from the permanent magnet 61 at a circumferential position closer to a second intermediate bridge portion 45A than at a circumferential position farther from the second intermediate bridge portion 45A. That is, the permanent magnets 62 each have a greater separation distance d from the permanent magnet 61 at a circumferentially inner position than at a circumferentially outer position. Such a relationship in magnitude between the separation distances d tends to occur when α1 > α2, where α1 and α2 are the angles of the extending directions of the permanent magnets 61, 62 with respect to the d-axis, respectively. In particular, in the present embodiment, α1 > α2, and α2 is 90 degrees or less (or an angle slightly greater than 90 degrees).

In the present embodiment, the second intermediate bridge portion 45A extends radially inward beyond radially inner edges 6221 of circumferential ends 622 of the permanent magnets 62 facing the second intermediate bridge portion 45A in the circumferential direction. In other words, when a line segment L4 connecting the radially inner (and circumferentially opposing) vertices of the two permanent magnets 62 located on one side in the circumferential direction with respect to the d-axis is used as a reference, the second intermediate bridge portion 45A extends radially inward beyond the line segment L4. On the other hand, the second intermediate bridge portion 45A does not extend radially outward beyond radially outer edges 6221 of the circumferential ends 622 of the permanent magnets 62 facing the second intermediate bridge portion 45A in the circumferential direction. In other words, when a line segment L3 connecting the radially outer (and circumferentially opposing) vertices of the two permanent magnets 62 located on the one side in the circumferential direction with respect to the d-axis is used as a reference, the second intermediate bridge portion 45A does not extend radially outward beyond the line segment L3.

As described above, in the present embodiment, the radial length of the second intermediate bridge portion 45A is significantly larger than the radial width d0 of the permanent magnet 62, and extends radially inward beyond the permanent magnets 62. In this case, rounded corners R11, R12 on both radial sides of the second intermediate bridge portion 45A can be made relatively large. This can effectively reduce stress concentration (stress concentration due to the centrifugal force) on both radial ends of the second intermediate bridge portion 45A. In other words, it is possible to reduce the width d10 of the second intermediate bridge portion 45A (and reduce leakage magnetic flux through the second intermediate bridge portion 45A) without increasing stress on both radial ends of the second intermediate bridge portion 45A.

In the present embodiment, the radial length of the second intermediate bridge portion 45A is increased by causing the second intermediate bridge portion 45A to extend radially inward beyond the line segment L4. This can reduce a disadvantage that tends to occur when the second intermediate bridge portion 45A is extended radially outward beyond the line segment L3 (not shown). Specifically, as can be seen from FIG. 6 and the above description, when the second intermediate bridge portion 45A extends radially outward beyond the above line segment L3, the width of a second portion 3212A (magnetic path width) is reduced accordingly. In this case, the reduction in width of the second portion 3212A (magnetic path width) causes a decrease in reluctance torque. On the other hand, according to the present embodiment, the second intermediate bridge portion 45A is extended radially inward beyond the line segment L4 without being extended radially outward beyond the line segment L3, as described above. Therefore, the width of the second portion 3212A (magnetic path width) is not reduced due to the second intermediate bridge portion 45A.

According to the present embodiment, since the radial length of the second intermediate bridge portion 45A is increased, it is possible to reduce stress concentration on the second intermediate bridge portion 45A (and as a result, increase the rotational speed of the motor 1) and to effectively prevent a decrease in reluctance torque (decrease in width of the second portion 3212A) due to the increase in radial length of the second intermediate bridge portion 45A.

In the present embodiment, the second magnet holes 322A each have a first overhang portion 3221A at its end closer to the second intermediate bridge portion 45A in the circumferential direction (hereinafter also simply referred to as "circumferentially outer end 322-3"). The first overhang portion 3221A extends toward (overhangs) the permanent magnet 62 in the circumferential direction on the radially inner side of the circumferentially outer end 322. In this case, the first overhang portion 3221A may overlap the permanent magnet 62 with a part 3201A of the rotor core 32 therebetween as viewed in the radial direction. The first overhang portion 3221A is formed so as to be continuous from the rounded corner R12, forms a rounded corner R13, and then terminates with a rounded corner R14 near the vertex on the radially inner side and circumferentially inner side of the permanent magnet 62. The first overhang portion 3221A has a function to reduce an increase in back electromotive voltage.

In the present embodiment, the second magnet holes 322A each have a second overhang portion 3222A at its end farther from the second intermediate bridge portion 45A in the circumferential direction (hereinafter also simply referred to as "circumferentially inner end 322-4"). The second overhang portion 3222A extends toward (overhangs) the permanent magnet 62 in the circumferential direction on the radially outer side of the circumferential inner end 322-4. In this case, the second overhang portion 3222A may overlap the permanent magnet 62 with a part 3202A of the rotor core 32 therebetween as viewed in the radial direction. As described above, the second overhang portion 3222A may be provided in the common second magnet hole 322A in a diagonal positional relationship with the first overhang portion 3221. In this case, the function of the second overhang portion 3222A (function to reduce an increase in back electromotive force) is added, so that an increase in back electromotive force can be effectively reduced.

Since the second overhang portion 3222A enlarges the second magnet hole 322A toward the second portion 3212A (i.e., causes the second center bridge portion 44 to extend radially outward beyond the permanent magnet 62), the width of the second portion 3212A (magnetic path width) may be reduced depending on the shape of the second overhang portion 3222A etc. Therefore, the second overhang portion 3222A is preferably formed so as not to significantly reduce the width of the second portion 3212A (magnetic path width). Particularly in the present embodiment, as described above, the separation distance d between the permanent magnet 62 and the permanent magnet 61 is greater at a circumferential inner position on the permanent magnet 62 than at a circumferentially outer position on the permanent magnet 62. Therefore, forming the second overhang portion 3222A at a circumferentially inner position on the permanent magnet 62 rather than at a circumferentially outer position on the permanent magnet 62 makes it easier to allow the second portion 3212A to have a necessary width (magnetic path width).

In the present embodiment, the circumferentially outer second magnet holes 322A each also have an overhang portion 3223A in such a manner that the overhang portion 3223A faces the first overhang portion 3221A in the circumferential direction. In this case, the function of the overhang portion 3223A (function to reduce an increase in back electromotive force) is added, so that an increase in back electromotive force can be effectively reduced.

The present embodiment also has the same effects as those of the above embodiment.

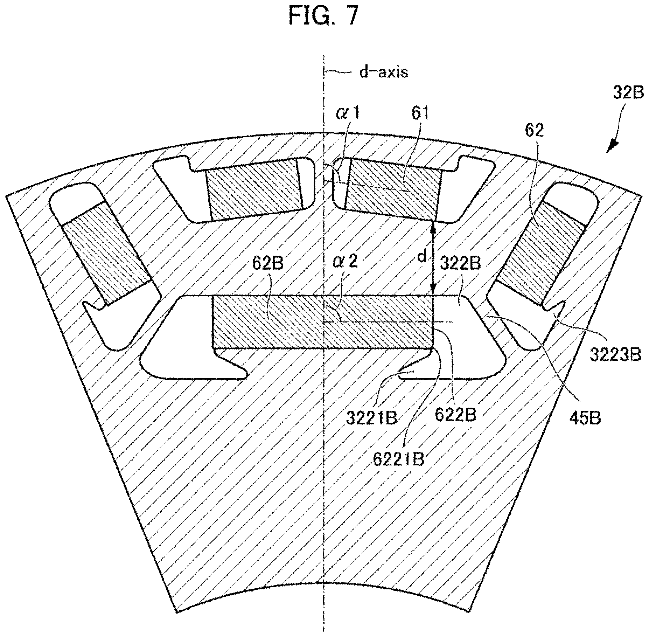

FIG. 7 is an enlarged view of a portion related to one magnetic pole according to still another embodiment.

A rotor core 32B of the present embodiment is different from the rotor core 32 of the above embodiment mainly in that the circumferentially inner second magnet holes 322 are replaced with a single second magnet hole 322B (hereinafter also referred to as "central second magnet hole 322B" in order to distinguish it from radially outer second magnet holes 322B). The orientation of a permanent magnet 62B in the central second magnet hole 322B is therefore different from the above embodiment.

Specifically, in the present embodiment, the permanent magnet 62B has a smaller separation distance d from the permanent magnet 61 at a circumferential position closer to a second intermediate bridge portion 45B than at a circumferential position farther from the second intermediate bridge portion 45B in the circumferential direction (e.g., a circumferential position on the d-axis). That is, the permanent magnet 62 has a greater separation distance d from the permanent magnet 61 at a circumferentially inner position than at a circumferentially outer position. Such a relationship in magnitude between the separation distances d tends to occur when α1 > α2, where α1 and α2 are the angles of the extending directions of the permanent magnets 61, 62B with respect to the d-axis, respectively. In particular, in the present embodiment, α1 > α2, and α2 is 90 degrees or less (or an angle slightly greater than 90 degrees).

Accordingly, in the present embodiment as well, the second intermediate bridge portion 45B extends radially inward beyond a radially inner edge 6221B of a circumferential end 622B of the permanent magnet 62B facing the second intermediate bridge portion 45B in the circumferential direction, as in the embodiment described above with reference to FIG. 6.

In the present embodiment as well, as in the embodiment described above with reference to FIG. 6, a first overhang portion 3221B corresponding to the first overhang portion 3221 and an overhang portion 3223B corresponding to the overhang portion 3223A may be provided.

The present embodiment also has the same effects as those of the above embodiment. In the example shown in FIG. 7, a single permanent magnet 62B is provided in the central second magnet hole 322B. However, instead of a single permanent magnet 62B, two or more permanent magnets may be provided so as to be arranged next to each other in the circumferential direction.

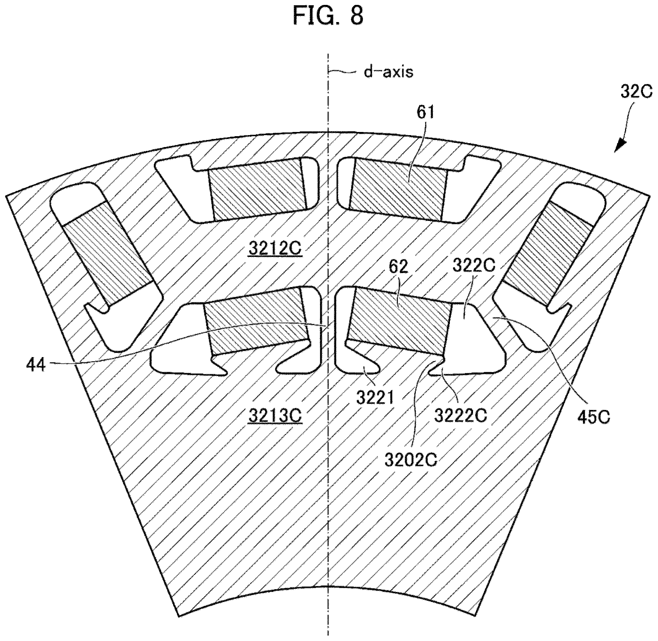

FIG. 8 is an enlarged view of a portion related to one magnetic pole according to yet another embodiment.

A rotor core 32C according to the present embodiment is different from the rotor core 32 according to the above embodiment in that the circumferentially inner second magnet holes 322 are replaced with second magnet holes 322C. The second magnet holes 322C are different in that the above second overhang portion 3222 is replaced with a second overhang portion 3222C. The second overhang portion 3222C is different from the above second overhang portion 3222 in position.

Specifically, the second magnet holes 322C each have the second overhang portion 3222C at its end farther from the second center bridge portion 44 in the circumferential direction (circumferentially outer end). The second overhang portion 3222C extends toward (overhangs) the permanent magnet 62 in the circumferential direction on the radially inner side of the circumferential outer end. In this case, the second overhang portion 3222 may overlap the permanent magnet 62 with a part 3202C of the rotor core 32 therebetween as viewed in the radial direction. As described above, the second overhang portion 3222C may be provided in the common second magnet hole 322C on the same radially inner side as the first overhang portion 3221. In this case, the function of the second overhang portion 3222C (function to reduce an increase in back electromotive force) is added, so that an increase in back electromotive force can be effectively reduced.

The present embodiment also has the same effects as those of the above embodiment. In the present embodiment, however, the second overhang portion 3222C is provided on the radially inner side of the second magnet hole 322C at the second intermediate bridge portion 45C. The second overhang portion 3222C can therefore be advantageous in that the second overhang portion 3222C does not affect the width of a second portion 3212C (magnetic path width) at all. However, the second overhang portion 3222C can be disadvantageous in that the second overhang portion 3222C together with the first overhang portion 3221 may obstruct a magnetic path through a third portion 3213C. In other words, in the rotor core 32 according to the above embodiment (see FIG. 3), the second overhang portion 3222 is located diagonally to the first overhang portion 3221. Therefore, the second overhang portion 3222 can be advantageous in that the second overhang portion 3222 does not excessively restrict magnetic flux generated from the permanent magnet 62.

Although the embodiments are described in detail above, the present disclosure is not limited to the specific embodiments, and various modifications and changes can be made within the scope of the claims. It is also possible to combine all or part of the constituent elements of the embodiments described above.

### Description of the Reference Numerals

1 ... motor (rotating electrical machine), 30 ... rotor, 32, 32A, 32B, 32C ... rotor core, 328 ... outer peripheral surface, 3211 ... first portion, 3212, 3212A, 3212C ... second portion, 3213 ... third portion, 44 ... second center bridge portion (at least one bridge portion, center bridge portion), 45A, 45B ... second intermediate bridge portion (at least one bridge portion, intermediate bridge portion), 321 ... first magnet hole, 61 ... permanent magnet (first permanent magnet), 62 ... permanent magnet (second permanent magnet), 322, 322A, 322B, 322C ... second magnet hole, 322-1 ... circumferentially inner end (first end), 322-2 ... circumferential outer end (second end), 322-3 ... circumferentially outer end (first end), 322-4 ... circumferentially inner end (second end), 3221, 3221A ... first overhang portion, 3222, 3222A, 3222C ... second overhang portion

## Claims

1. A rotor for a rotating electrical machine, the rotor comprising:
a rotor core having a radially outer first magnet hole and a radially inner second magnet hole;
a first permanent magnet in the first magnet hole; and
a second permanent magnet in the second magnet hole, wherein
the rotor core includes a first portion located radially outward of the first magnet hole, a second portion extending between the first magnet hole and the second magnet hole in such a manner that both sides in a circumferential direction of the second portion extend to an outer peripheral surface of the rotor core, a third portion extending radially inward of the second magnet hole in such a manner that both sides in the circumferential direction of the third portion extend to the outer peripheral surface of the rotor core, and a plurality of bridge portions located radially inward of the outer peripheral surface of the rotor core and connecting the third portion and the second portion,
the second permanent magnet includes a d-axis-side second permanent magnet located on a d-axis or near the d-axis,
a separation distance of the d-axis-side second permanent magnet from the first permanent magnet is smaller at a position closer to at least one of the plurality of bridge portions in the circumferential direction than at a position farther from the at least one bridge portion in the circumferential direction along a side of the d-axis-side second permanent magnet that faces the first permanent magnet, as viewed in an axial direction, and
the at least one bridge portion extends radially inward beyond a radially inner edge of a circumferential end of the d-axis-side second permanent magnet facing the at least one bridge portion in the circumferential direction.

2. The rotor for a rotating electrical machine according to claim 1, wherein for a pair of the second permanent magnets in adjacent two of the second magnet holes with the at least one bridge portion interposed between the two second magnet holes in the circumferential direction, when a line segment connecting radially inner and circumferentially opposing vertices of the pair of the second permanent magnets is used as a reference, the at least one bridge portion terminates radially inward of the line segment.

3. The rotor for a rotating electrical machine according to claim 1, wherein
two of the second magnet holes and two of the second magnet holes are provided on each side in the circumferential direction of the d-axis for each magnetic pole,
the plurality of bridge portions includes a center bridge portion extending in a radial direction so as to extend on the d-axis, and an intermediate bridge extending at a position away from the d-axis in the circumferential direction, and
the at least one bridge portion is the center bridge portion or the intermediate bridge.

4. The rotor for a rotating electrical machine according to claim 3, wherein
the at least one bridge portion is the center bridge portion, and
the second magnet holes and the second permanent magnets are configured symmetrically with respect to the d-axis.

5. The rotor for a rotating electrical machine according to claim 4, wherein
each of the second permanent magnets in adjacent two of the second magnet holes with the center bridge portion interposed between the two second magnet holes in the circumferential direction is disposed in such an orientation that a side of the second permanent magnet that is closer to the d-axis in the circumferential direction is located radially outward of a side of the second permanent magnet that is farther from the d-axis in the circumferential direction.

6. The rotor for a rotating electrical machine according to claim 4 or 5, wherein
the second magnet hole adjacent to the center bridge portion in the circumferential direction includes a first overhang portion at a first end of the second magnet hole that is located closer to the center bridge portion in the circumferential direction, and
the first overhang portion extends toward the second permanent magnet in the second magnet hole in the circumferential direction on a radially inner side of the first end, and overlaps the second permanent magnet in the second magnet hole as viewed in the radial direction.

7. The rotor for a rotating electrical machine according to claim 6, wherein
the second magnet hole adjacent to the center bridge portion in the circumferential direction includes a second overhang portion at a second end of the second magnet hole that is located farther from the center bridge portion in the circumferential direction, and
the second overhang portion extends toward the second permanent magnet in the second magnet hole in the circumferential direction on a radially outer side of the second end, and overlaps the second permanent magnet in the second magnet hole as viewed in the radial direction.
